Europäisches Patentamt

**European Patent Office**

Office européen des brevets

(11) Numéro de publication: **0 217 720**
**B1**

(12) **FASCICULE DE BREVET EUROPEEN**

(45) Date de publication du fascicule du brevet: **18.04.90**

(21) Numéro de dépôt: **86440082.5**

(22) Date de dépôt: **24.09.86**

(51) Int. Cl.⁵: **A 01 B 33/02,** A 01 B 9/00,
A 01 B 33/10

(54) **Machine agricole de travail du sol à rotor entraîné autour d'un axe oblique.**

(30) Priorité: **25.09.85 FR 8514314**

(43) Date de publication de la demande:
**08.04.87 Bulletin 87/15**

(45) Mention de la délivrance du brevet:
**18.04.90 Bulletin 90/16**

(84) Etats contractants désignés:
**DE FR GB IT NL SE**

(56) Documents cités:
**CH-A- 433 843**
**DE-A-1 965 753**
**FR-A- 976 450**
**FR-A-1 306 526**
**FR-A-1 501 969**
**FR-A-2 023 376**
**FR-A-2 148 368**
**US-A-3 054 461**
**US-A-3 233 686**

(73) Titulaire: **KUHN S.A.**
**4, Impasse des Fabriques**
**F-67700 Saverne (FR)**

(72) Inventeur: **Kirch, Michel**
**3, rue des Jardins**
**F-57410 Etting (FR)**

Courier Press, Leamington Spa, England.

## Description

La présente invention concerne une machine agricole de travail du sol comportant un rotor muni de groupes d'outils de travail du sol régulièrement espacés le long dudit rotor, ce dernier étant entraîné positivement par une source motrice autour de son axe longitudinal qui s'étend obliquement par rapport à la direction de travail de la machine, de telle sorte qu'au niveau du sol, les outils de travail du sol tournent vers l'arrière, compte tenu du sens de déplacement de la machine au travail, et travaillent des bandes de terre qui sont sensiblement jointives, lesdits groupes d'outils de travail du sol présentant chacun une concavité dirigée vers l'extrémité du rotor la plus en avant, compte tenu du sens de déplacement de la machine au travail, ladite machine étant par ailleurs munie de moyens de stabilisation latérale comportant au moins un organe de stabilisation latérale agencé dans le voisinage de l'extrémité du rotor la plus en arrière, compte tenu du sens de déplacement de la machine au travail, ainsi que de moyens de soutènement comportant au moins un organe de soutènement réglable en hauteur et roulant sur le sol pendant le travail.

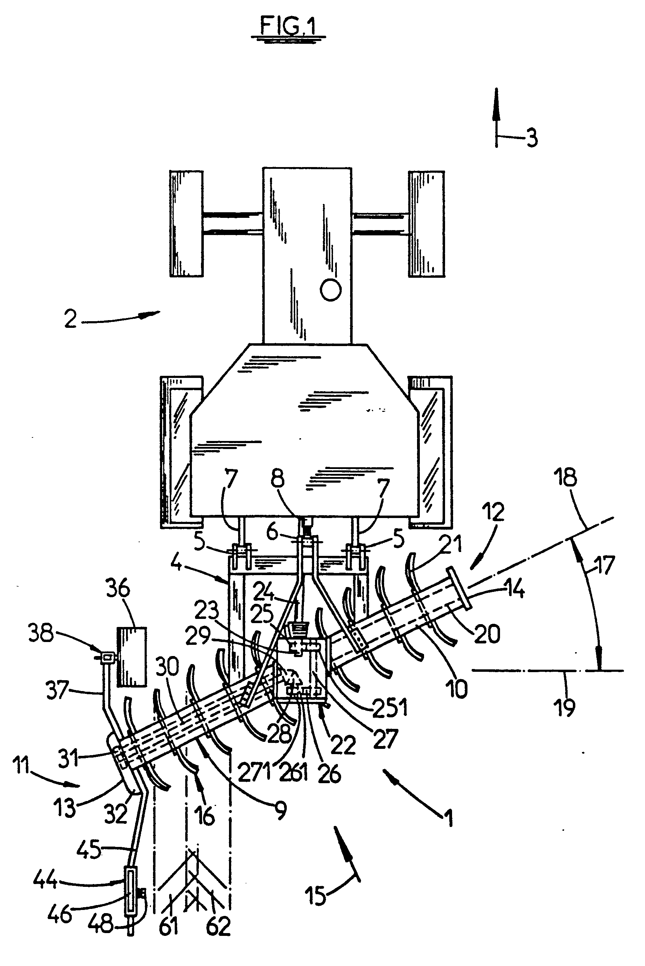

Une telle machine agricole de travail du sol est décrite dans la CH-A-433 843. Cette machine agricole de travail du sol connue comporte un châssis formé par une structure centrale à chaque extrémité de laquelle est prévue une structure latérale s'étendant vers l'arrière de sorte à supporter un rotor susceptible de tourner autour de son axe longitudinal. La machine comporte aussi une structure d'attelage qui est liée audit châssis et par l'intermédiaire de laquelle ladite machine est, durant l'utilisation, attelée à un tracteur. La liaison entre la structure d'attelage et le châssis est realisée au moyen d'un axe dont l'axe géométrique est dirigé suivant la direction de travail. En pivotant le châssis autour de cet axe, ledit châssis peut ainsi occuper par rapport audit axe, la position symétrique de celle qu'il occupe sur la figure 1.

Le rotor, guidé en rotation entre les extrémités arrière, des structures latérales, est équipé de groupes d'outils de travail du sol. Son axe longitudinal s'étend obliquement par rapport à la direction de travail. Le rotor comporte ainsi, compte tenu du sens de déplacement de la machine au travail, une extrémité avant et une extrémité arrière. Les groupes d'outils de travail du sol sont composés par un disque dont le périmètre est dentelé. Chaque disque est concave et sa concavité est dirigée vers l'extrémité avant du rotor. Il apparaît en sus, que tous les disques occupent la même position angulaire par rapport à l'axe longitudinal du rotor.

La machine est aussi équipée de deux roues de soutènement, une pour chaque position occupée par le châssis par rapport à la structure d'attelage. Ces roues de soutènement sont agencées près de l'extrémité arrière du rotor et s'étendent, en vue perpendiculaire à la direction de travail, à côté du disque agencé à cette extrémité, de sorte à rouler sur la surface du sol non travaillée. Chaque roue de soutènement qui est opérationnelle, détermine ainsi la profondeur de travail des disques. Cette profondeur de travail est réglable grâce à un secteur à trous dans l'un desquels est introduite une broche.

Chaque roue de soutènement est aussi équipée d'un disque plat qui pénètre quelque peu dans le sol non travaillé lorsque la roue de soutènement roule sur la surface du sol, La fonction de ce disque plat n'est pas expliquée. On peut néanmoins supposer qu'il est destiné à opposer une certaine résistance à la poussée latérale engendrée par les disques.

Cette machine connue comporte enfin encore des organes de transmission couplés, durant l'utilisation, à la prise de force du tracteur. Ces organes de transmission entraînent positivement le rotor autour de son axe longitudinal, de telle sorte que les disques tournent, au niveau du sol, vers l'arrière.

Cette machine connue fonctionne de la manière suivante. Lorsque la machine se trouve dans la position représentée sur la figure 1, chaque disque travaille une bande de terre et la déplace quelque peu vers le côté. La profondeur de travail est réglée par la roue de soutènement frontale. En bout de champ, l'utilisateur, après avoir relevé la machine, fait tourner le châssis avec le rotor de 180° autour de l'axe liant le châssis à la structure d'attelage. La machine est alors prête pour faire un passage adjacent. Au cours de ce passage, le tracteur déplacera la machine dans le sens contraire. Comme le rotor a cependant été pivoté de 180° par rapport à la structure d'attelage, la terre travaillée par les disques est déplacée dans le même sens qu'au passage précédent. Au cours de ce passage, la profondeur de travail est réglée par la roue de soutènement arrière.

Cette machine connue comporte plusieurs inconvénients.

Un premier inconvénient réside en fait dans la forme des outils de travail du sol qui sont constitués par des disques. En effet, un disque, même dentelé, pénètre, dans de multiples conditions, très difficilement dans le sol. De ce fait, l'épaisseur du disque doit être nécessairement faible. Malgré cette mesure, il est en général encore nécessaire de lester la machine avec des masses additionnelles. Compte tenu de cela, le disque est soumis à une usure relativement rapide. Cette usure est d'ailleurs encore accentuée par le fait que le rotor est entraîné positivement par une source motrice. En conséquence, un changement fréquent des disques est nécessaire, ce qui, compte tenu du mode de fixation des disques et de leur dimension, entraîne non seulement une immobilisation de la machine relativement longue, mais en sus des frais relativement substantiels.

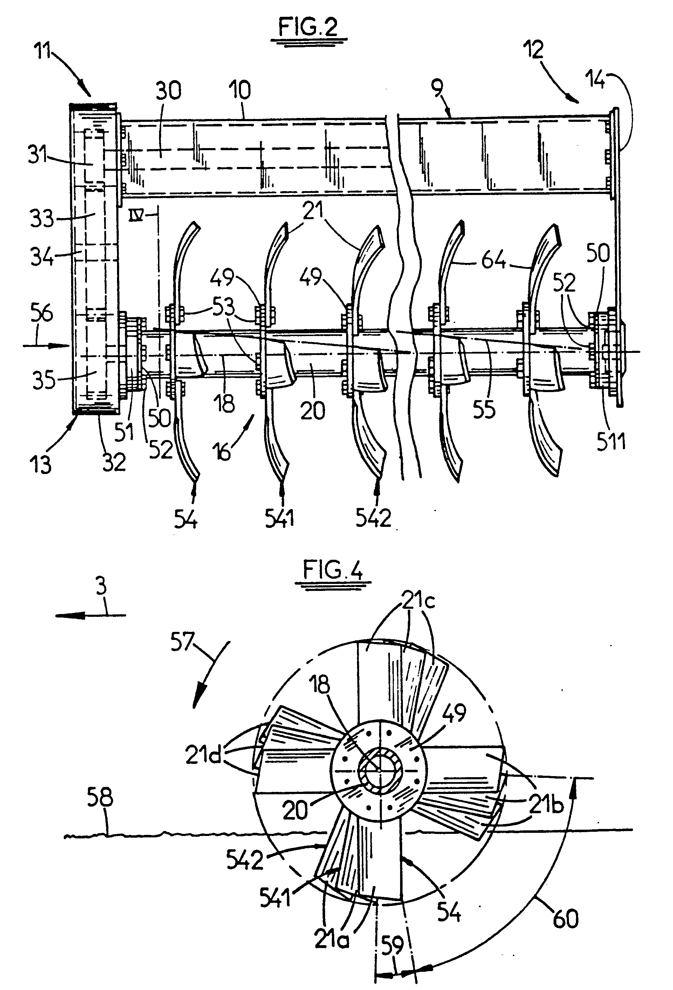

Un deuxième inconvénient de la machine connue réside dans le fait que la stabilisation latérale est très précaire. En effet, il appparaît très clairement sur la figure 2, que la surface de la portion du disque plat équipant la roue de soutènement opérationnelle, s'étendant dans le sol est très faible et nettement inférieure à la surface des portions des disques de travail du sol s'étendant dans le sol. En conséquence, cette petite surface sera très rapidement déformée sous l'action de la poussée latérale importante engendrée par les disques de travail du sol. Du reste, il convient de noter que ledit disque plat doit pénétrer dans la surface du sol non travaillée. Mais comme expliqué plus haut, un disque qui roule, pénètre relativement difficilement dans le sol pour peu que celui-ci soit dur. En conséquence, il peut arriver qu'au moins momentanément, une importante partie du poids de la machine repose sur ledit disque, ce qui pourra également entraîner la déformation de celui-ci. Du reste, si le disque plat ne pénètre pas totalement dans le sol, la profondeur de travail des disques de travail du sol ne sera pas correctement maintenue.

Un troisième inconvénient de la machine connue réside dans le fait que la roue de soutènement qui est opérationnelle, roule à côté du rotor. Un tel mode de soutènement est loin d'être optimal. En effet, si la roue de soutènement roule par-dessus un obstacle situé en-dehors de la bande de sol à travailler, le rotor est soulevé alors que cela n'est nullement nécessaire.

Le but de la présente invention est de remédier aux inconvénients de cette machine agricole de travail du sol connue.

A cet effet, la machine agricole de travail du sol selon la présente invention est caractérisée par le fait que chaque groupe d'outils de travail du sol comporte des bêches individuellement amovibles, la partie active de toutes les bêches étant inclinée en direction de l'extrémité du rotor la plus en avant, compte tenu du sens de déplacement de la machine au travail, que l'organe de stabilisation latérale agencé dans le voisinage de l'extrémité du rotor la plus en arrière, compte tenu du sens de déplacement de la machine au travail, est constitué par un soc s'étendant derrière ladite extrémité, et que le ou lesdits organes de soutènement s'étendent devant le rotor.

Avec ces caractéristiques, la machine agricole de travail du sol selon l'invention peut réaliser un très bon travail de la terre sans toutefois posséder les inconvénients de la machine de l'art antérieur.

En effet, comme les bêches sont d'une part montées sur le rotor pas groupes régulièrement espacés le long dudit rotor et que d'autre part la partie active de toutes les bêches est inclinée vers l'extrémité avant du rotor, chaque groupe de bêches décrit, en tournant, une surface concave dont la concavité est dirigée vers ladite extrémité avant du rotor. De ce fait, chaque groupe de bêches travaille une bande de terre en la retournant et en la déposant approximativement dans le sillon laissé par le groupe de bêches précédent lorsqu'on regarde vers l'extrémité avant du rotor.

Compte tenu de la structure d'un groupe de bêches — dans lequel les bêches sont relativement espacées les unes des autres — celui-ci n'a pas tendance à rouler sur la surface du sol comme un disque, mais, au contraire, pénètre bien dans le sol, même quand ce dernier est relativement dur. De cette sorte, les bêches peuvent avoir une épaisseur bien plus importante qu'un disque. On réduit, de ce fait substantiellement l'usure. Du reste, il est prévu dans la machine selon l'invention que les bêches soient individuellement amovibles de sorte qu'en cas d'usure, le changement des bêches puisse se faire sans avoir à démonter le rotor. Il en découle notamment une réduction substantielle du temps d'immobilisation de la machine et des frais.

La machine selon l'invention est ensuite équipée d'un soc de stabilisation latérale s'étendant derrière l'extrémité du rotor la plus en arrière. Cet agencement lui confère une remarquable stabilité latérale. En effet, compte tenu du fait que le soc s'étend derrière l'extrémité arrière du rotor, il est à une grande distance du point autour duquel le tracteur a tendance à tourner sous l'effet de la poussée latérale engendrée par le rotor. Du reste, comme le soc s'étend derrière l'extrémité arrière du rotor, il s'appuie avantageusement contre la muraille du sillon réalisé par le groupe de bêches agencé à cette extrémité. De cette sorte, la stabilisation est très importante sans toutefois que le soc n'ait à pénétrer très profondément dans le sol. Enfin le soc, de par sa forme, a toujours tendance à être tiré dans le sol, de telle sorte qu'une stabilité constante soit continuellement assurée.

La machine selon l'invention est enfin pourvue d'au moins un organe de soutènement s'étendant devant le rotor. Ceci garantit un maintien optimal de la profondeur de travail.

Avantageusement, la vitesse de rotation du rotor peut être réglée au moyen d'une boîte de vitesses. La vitesse de travail peut ainsi être parfaitement adaptée à la nature des travaux à réaliser. En effet, lorsqu'on souhaite obtenir des sillons bien tournés, une vitesse de rotation comprise entre 50 et 110 tours par minute sera choisie. Lorsqu'on recherche par contre un mélange des débris végétaux et de la terre, une vitesse de rotation comprise entre 100 et 200 tours par minute sera sélectionnée.

Les bêches qui équipent la machine selon l'invention ont avantageusement une partie active qui est courbée de manière sensiblement continue. préférentiellement, cette courbure est faite suivant un rayon sensiblement constant.

Cette forme permet aux bêches de bien retourner la terre arrachée.

Avantageusement, la partie active de la bêche est également vrillée. Ce vrillage est effectué de telle sorte que l'arête frontale de la partie active de la bêche, vue dans le sens de rotation, soit plus éloignée de l'extrémité du rotor la plus en avant, que l'arête arrière de ladite partie active. Préférentiellement, le vrillage de la partie active est sensiblement continu. La forme de la bêche se rapproche ainsi quelque peu de celle d'un versoir de charrue.

Ce vrillage permet ainsi d'améliorer le retournement de la terre arrachée.

Ce vrillage permet aussi de diminuer, voire de supprimer entièrement, le talonnage de la bêche lorsque celle-ci tourne et que la machine avance. Cette diminution ou suppression du talonnage entraîne une diminution de la puissance nécessaire à l'entraînement de la machine, de même qu'une diminution des vibrations auxquelles est soumise la machine pendant le travail.

Cette puissance absorbée et ces vibrations peuvent encore être diminuées, si on diminue ou si on supprime le talonnage de l'arête extérieure de la partie active de la bêche. A cet effet, le point d'intersection de l'arête extérieure et de l'arête frontale est plus éloigné de l'axe longitudinal du rotor que le point d'intersection de ladite arête extérieure et de l'arête arrière.

Avantageusement, chaque groupe de bêches est décalé angulairement le long de l'axe longitudinal du rotor par rapport à ses groupes de bêches adjacents. Préférentiellement, l'hélice ainsi formée s'étend de manière continue le long du rotor.

Cette caractéristique permet de diminuer les pointes de puissance absorbée et de rendre la marche de la machine plus douce, car les bêches correspondantes des différents groupes s'engagent successivement dans le sol. Mais cette caractéristique permet aussi à une bêche de retourner ou de projeter correctement la terre qu'elle a arrachée sans que les bêches du groupe vers lequel est dirigée sa partie active, ne gênent ce retournement ou cette projection.

Le décalage des groupes de bêches est avantageusement réalisé de telle sorte que lorsqu'une bêche d'un groupe est en train de retourner ou de projeter la terre arrachée, la bêche du groupe adjacent (en regardant vers l'extrémité avant du rotor) qui vient de retourner ou de projeter la terre, soit relativement éloignée de la bêche du premier groupe qui est en train de travailler. Parallèlement, la bêche dudit groupe adjacent qui va à son tour retourner ou projeter de la terre, ne s'engage dans le sol qu'après la bêche du premier groupe qui est en train de travailler.

Comme dit plus haut, la machine permet de travailler à des profondeurs différentes selon la nature des travaux à effectuer. Ces profondeurs de travail sont exactement déterminées par les moyens de soutènement qui comportent au moins un organe de soutènement réglable en hauteur et roulant sur le sol pendant le travail.

Comme dit plus haut également, le soc de stabilisation, de par sa forme, a tendance à être tiré dans le sol. Pour permettre en conséquence à l'extrémité du rotor, où s'étend ce soc de stabilisation de maintenir correctement la profondeur de travail souhaitée, il est prévu, selon une caractéristique supplémentaire de l'invention, qu'un organe de soutènement s'étende devant l'extrémité du rotor la plus en arrière, compte tenu du sens de déplacement de la machine au travail, extrémité derrière laquelle s'étend ledit soc de stabilisation.

La machine agricole de travail du sol selon l'invention comporte, par ailleurs, à l'une de ses extrémités, un carter latéral prévu pour transmettre le mouvement au rotor. Or ce carter latéral a en général un poids relativement important. Pour également permettre dans ce cas à cette extrémité du rotor de maintenir correctement la profondeur de travail souhaitée, il est prévu, selon une caractéristique supplémentaire de l'invention qu'un organe de soutènement s'étende devant cette extrémité du rotor.

Il peut d'ailleurs être avantageusement prévu dans l'invention, qu'un organe de soutènement s'étende devant chaque extrémité du rotor.

Le pouvoir de stabilisation du soc de stabilisation peut être bien adapté aux différentes conditions de travail rencontrées lorsque la profondeur de travail dudit soc est réglable indépendamment de celle du rotor.

D'autres caractéristiques de l'invention sont contenues dans les autres sous-revendications et apparaîtront dans la description ci-dessous d'un exemple de réalisation non limitatif d'une machine selon l'invention. Cette description fait référence au dessin annexé sur lequel,

La figure 1 montre une vue de dessus d'un exemple de réalisation d'une machine selon l'invention attelée à un tracteur,

La figure 2 montre à une échelle agrandie une vue suivant la flèche (15) définie sur la figure 1 de l'arrière de la machine selon l'invention représentée sur la figure 1,

La figure 3 montre une vue en perspective trois quarts avant de l'extrémité gauche de la machine selon l'invention représentée sur la figure 1,

La figure 4 montre une vue partielle du rotor de la machine selon l'invention représentée sur la figure 1, le rotor étant coupé par le plan IV (figure 2), et étant vu suivant la flèche (56) définie sur la figure 2,

La figure 5 montre une bêche du rotor, vue de face,

La figure 6 montre la bêche de la figure 5, vue depuis le côté gauche, et

La figure 7 montre la bêche de la figure 6, vue de dessus.

Sur la figure 1, la machine agricole de travail du sol (1) selon l'invention est attelée à un tracteur agricole (2) qui tire celle-ci dans le sens et la direction de travail (3).

A cet effet, la machine (1) est munie d'une structure d'attelage (4) qui comporte deux points d'attelage inférieurs (5) et un point d'attelage supérieur (6). Ces points d'attelage (5, 6) sont accouplés aux bras inférieurs (7), respectivement à la bielle de poussée (8) du mécanisme d'attelage à trois points du tracteur (2).

La partie arrière de la structure d'attelage (4) est fixée sur le châssis (9) de la machine (1). Ce châssis (9) est composé par une traverse supérieure (10) qui comporte à chacune de ses extrémités (11, 12) une paroi latérale (13, 14) s'étendant vers le bas. Vu suivant la flèche (15), le châssis (9) a une forme de U renversé. Vu de dessus, le châssis (9) s'étend obliquement par rapport à la direction de travail (3) de telle sorte que son extrémité droite (12) soit située plus en avant que son extrémité gauche (11).

Entre les extrémités inférieures des parois latérales (13, 14) est agencé un rotor (16) qui s'étend parallèlement au châssis (9), c'est-à-dire que — vu de l'arrière dans le sens de travail (3) — l'extrémité droite (12) du rotor (16) est située plus en avant que son extrémité gauche (11). L'angle (17) que fait l'axe longitudinal (18) du rotor (16) avec une perpendiculaire (19) à la direction de travail (3), est tel que les zones de travail (61 et 62) de deux groupes de bêches (541, 542) adjacents sont sensiblement jointives, mais de préférence se recouvrent quelque peu. Cet angle (17) est Préférentiellement compris entre 20° et 35°. Dans l'exemple de réalisation décrit, l'angle (17) est environ égal à 26°.

Le rotor (16) est composé par une poutre centrale (20) sur laquelle sont fixés des outils de travail du sol en forme de bêches (21). Le diamètre du rotor est avantageusement supérieur à 50 centimètres. De préférence, ce diamètre est sensiblement compris entre 60 et 90 centimètres.

Ces bêches (21) ont leur partie active (64) courbée et la courbure de toutes les bêches (21) est dirigée vers l'extrémité droite (12) du rotor (16) qui s'étend la plus en avant, compte tenu du sens de travail (3).

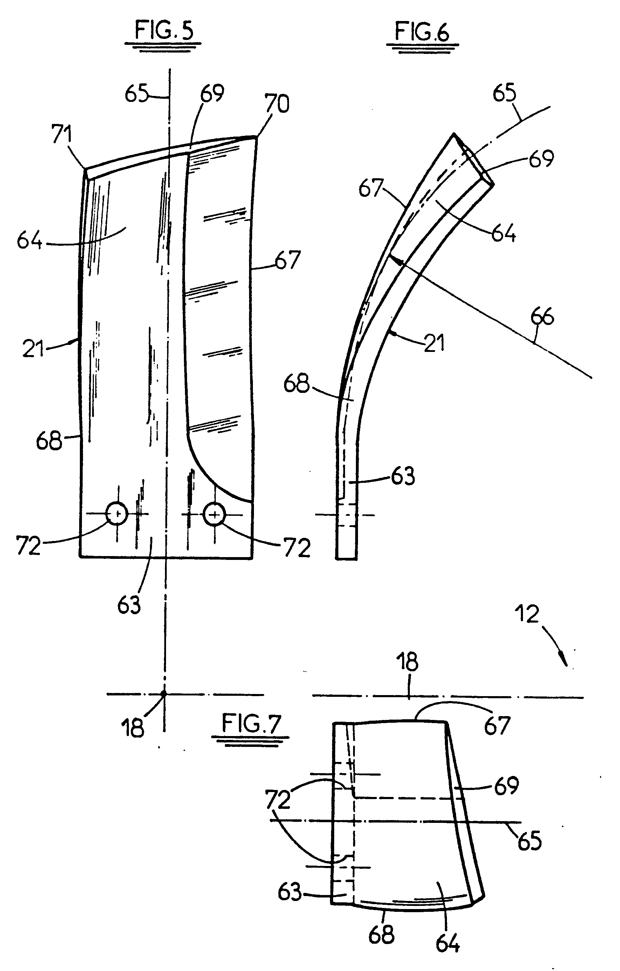

Pendant le travail, le rotor (16) est entraîné positivement en rotation autour de son axe longitudinal (18), de telle sorte que les bêches (21) se déplacent au niveau du sol (58) de l'avant vers l'arrière (voir figure 4). A cet effet, le châssis (9) comporte sensiblement au niveau du plan longitudinal de symétrie du tracteur (2), un carter de renvoi (22) qui est constitué sous forme de boîte de vitesses. Ce carter de renvoi (22) comporte un arbre d'entrée (23) qui reçoit le mouvement de l'arbre de prise de force du tracteur (2) par l'intermédiaire d'un arbre de transmission à joints universels (24). A son extrémité arrière, l'arbre d'entrée (23) est muni d'une roue dentée (25) qui entraîne une autre roue dentée (251) liée à un premier arbre intermédiaire (27) s'étendant sensiblement parallèlement à l'arbre d'entrée (23). A l'arrière, l'arbre intermédiaire (27) est muni d'une roue dentée (26) qui engrène avec une roue dentée (261) liée à un second arbre intermédiaire (271) s'étendant parallèlement à l'arbre d'entrée (23) et au premier arbre intermédiaire (27). A l'avant, le second arbre intermédiaire (271) comporte une roue dentée conique (28) qui engrène avec une autre roue dentée conique (29). Cette seconde roue dentée conique (29) est liée à un arbre d'entraînement (30) logé à l'intérieur de la traverse supérieure (10) du châssis (9). Cet arbre d'entraînement (30) s'étend jusqu'à l'extrémité gauche (11) du châssis (9) où il est muni d'une roue dentée (31). Cette roue dentée (31) est logée à l'intérieur de la paroi latérale gauche (13) qui est réalisée sous forme de carter latéral (32). Ce carter latéral (32) est représenté plus en détail sur la figure 2. On voit en effet que la roue dentée (31) engrène avec une deuxième roue dentée (33) calée sur un arbre intermédiaire (34). Cette deuxième roue dentée (33) engrène elle-même avec une troisième roue dentée (35) liée au rotor (16).

Les roues dentées (26, 261) peuvent être, d'une manière connue de l'homme de l'art, permutées ou remplacées par un autre jeu. De cette sorte, la vitesse de rotation du rotor (16) peut être parfaitement adaptée aux différents travaux à réaliser.

Cette vitesse de rotation du rotor (16) est préférentiellement comprise entre 50 et 110 tours par minute en travail profond, tel que le labour, et entre 100 et 200 tours par minute en travail moins profond, tel que le déchaumage.

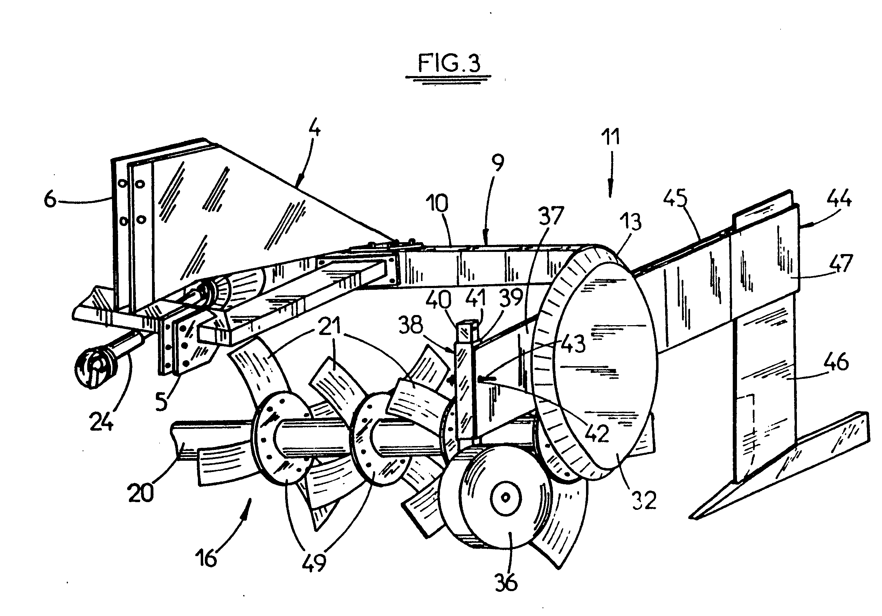

Sur la figure 1, on voit encore qu'à l'avant de son extrémité gauche (11), le châssis (9) est muni d'une roue de soutènement (36) qui roule sur le sol pendant le travail. Cette roue (36) est liée au châssis (9) au moyen d'une structure de support (37) de telle sorte que la position verticale de la roue de soutènement (36) par rapport au châssis (9) puisse être réglée au moyen d'un mécanisme de réglage (38) qui est représenté plus en détail sur la figure 3. Ce mécanisme (38) est constitué dans l'exemple décrit par un manchon tubulaire (39) fixé à la structure de support (37), dans lequel est engagé un tenon (40) lié à la roue de soutènement (36). De préférence, le tenon (40) et le manchon (39) ont une forme telle que le tenon (40) est lié en rotation au manchon (39) lorsqu'il est engagé dans ledit manchon (39). Le tenon (40) est muni d'un certain nombre de trous (41) qui peuvent être amenés en coïncidence avec un trou (42) aménagé dans le manchon (39) et le traversant de part en part. La liaison en translation entre le tenon (40) et le manchon (39) est réalisée par une broche (43) qui traverse un trou (41) du tenon (40) et le trou (42) du manchon (39). Pour amener la roue de soutènement (36) dans une autre position par rapport au châssis (9), il suffit d'amener un autre trou (41) du tenon (40) en face du trou (42) du manchon (39) et de verrouiller avec la broche (43). Grâce à cette roue de soutènement (36), il est ainsi possible de régler la profondeur de travail de la machine (1).

Dans le cadre de l'invention, il est possible d'avoir également une roue de soutènement (36) à l'extrémité droite (12) du châssis (9). Du reste, le mécanisme de réglage (38) peut être différent de celui représenté et peut par exemple comporter une vis-manivelle et un écrou. Dans ce dernier cas, le réglage de la profondeur de travail des bêches (21) peut être effectué de manière continue.

A l'arrière de l'extrémité gauche (11) du châssis (9) est également fixé un organe de stabilisation latérale (44). Cet organe de stabilisation latérale (44) est lié au châssis (9) au moyen d'une structure de support (45). L'organe de stabilisation latérale (44) est constitué par un soc (46) qui s'engage dans le sol pendant le travail, et qui est maintenu par la structure de support (45) au moyen d'un manchon (47) (voir figure 3). La position relative du soc (46) par rapport au châssis (9) peut être réglée en faisant coulisser ledit soc (46) dans le manchon (47), après avoir desserré une vis de maintien (48) qui empêche la translation du soc (46) dans le manchon (47) lorsqu'elle est serrée.

L'organe de stabilisation latérale (44) absorbe l'effort transversal qui s'exerce sur le rotor (16) pendant le travail et qui est engendré par l'inclinaison du rotor (16).

Sur la figure 2, on voit de manière plus détaillée le rotor (16). La poutre centrale (20) est formée par un tube sur lequel sont fixés à des intervalles régulièrement espacés des flasques (49). A chaque extrémité, la poutre centrale (20) est munie d'un flasque de fixation et d'entraînement (50). Ces flasques de fixation et d'entraînement (50) permettent de fixer le rotor (16) sur des moyeux (51, 511) au moyen de vis (52). Les moyeux (51, 511) sont guidés en rotation dans les parois latérales (13, 14).

Le moyeu (51) qui est guidé en rotation dans la paroi latérale gauche (13), c'est-à-dire le carter latéral (32), est lié à la roue dentée (35) qui lui transmet le mouvement depuis la prise de force du tracteur (2) comme expliqué plus haut.

Les flasques (49) servent à fixer les bêches (21) sur la poutre centrale (20). Cette fixation est faite au moyen de vis (53). La forme particulière desdites bêches (21) sera décrite plus loin. Les bêches (21) sont ainsi fixées sur le rotor (16) suivant des groupes (54, 541, 542,...). Les flasques (49) sont agencés sur la poutre centrale (20) de telle sorte que chaque groupe de bêches est décalé angulairement autour de l'axe longitudinal (18) du rotor (16) par rapport à ses groupes de bêches adjacents. Les bêches (21) correspondantes de chaque groupe de bêches (54, 541, 542,...) génèrent ainsi une hélice continue (55) qui est centrée sur l'axe longitudinal (18) du rotor (16). Cette disposition apparaît plus clairement sur la figure 4 qui est une vue du rotor (16) suivant la flèche (56). Sur la figure 4, on a spécifié le sens de rotation (57) du rotor (16) ainsi que son sens de travail (3). Pour une bonne compréhension de la figure, on n'a représenté que trois groupes de bêches (54, 541, 542) consécutifs. Sur cette figure, on voit aussi que les parties actives (64) (voir figures 5 à 7) des bêches (21) d'un même groupe (54, 541, 542,...) ne sont pas jointives. Il apparaît également sur cette figure que les bêches (21a, 21b, 21c, 21d) correspondantes des différents groupes de bêches (54, 541, 542,...) attaquent le sol (58) l'une après l'autre, les bêches (21) du groupe (54) situé à l'extrémité gauche (11) de la machine (1) attaquant le sol (58) en premier. Chaque groupe de bêches (541, 542,...) est ainsi décalé par rapport au groupe adjacent précédent (54, 541,...) d'un angle (59). Cet angle (59) est choisi de telle sorte que l'angle (60) formé entre la bêche (21a) par exemple du groupe (54, 541,...) et la bêche (21b) précédente du groupe adjacent suivant (541, 542,...), soit suffisant pour que cette dernière bêche (21b) ne gêne pas le retournement ou la projection de la terre arrachée par la bêche (21a) du groupe précédent. Avantageusement, la valeur de l'angle (59) est différente de la valeur de l'angle (60).

Cette disposition est surtout importante pour le travail profond où les mottes arrachées ont un grand volume.

Les figures 5 à 7 montrent la forme des bêches (21). Les bêches (21) comportent une partie de fixation (63) qui est sensiblement plane, et une partie active (64) qui est courbée. Dans l'exemple décrit, cette courbure est faite de manière sensiblement continue tout au long de la partie active (64) et de préférence de telle sorte que l'axe longitudinal (65) soit sensiblement courbé suivant un rayon de courbure (66) sensiblement constant. Ce rayon de courbure (66) est sensiblement compris entre 0,3 et 0,5 fois le diamètre du rotor (16).

La partie active (64) est de plus vrillée de telle manière que l'arête frontale (67), la bêche (21) étant vue dans le sens de rotation (57) (figure 4), est plus éloignée de l'extrémité droite (12) la plus en avant du rotor (16) que l'arête arrière (68) de ladite partie active (64). Préférentiellement, le vrillage de la partie active (64) est réalisé de manière sensiblement continue. Avantageusement, ce vrillage peut être réalisé autour d'un axe sensiblement parallèle à l'axe longitudinal (65) de la partie active (64). Dans l'exemple décrit, ce vrillage est réalisé autour de cet axe longitudinal (65). Avantageusement, la valeur de ce vrillage est sensiblement au niveau de l'arête extérieure (69) de l'ordre de 5° à 15° et de préférence environ 10°.

L'arête extérieure (69) de la partie active (64) s'étend obliquement vers l'arrière de telle sorte que le point d'intersection (70) de l'arête extérieure (69) et de l'arête frontale (67) est plus éloigné de l'axe longitudinal (18) du rotor (16) que le point d'intersection (71) de l'arête extérieure (69) et de l'arête arrière (68).

L'arête frontale (67) est de plus biseautée.

Du reste, la partie active (64) de la bêche (21) a une largeur assez importante, ce qui lui permet de bien agripper les mottes de terre arrachées pour les retourner et/ou les projeter.

Sur les figures 5 à 7, on voit encore que la partie de fixation (63) des bêches (21) est pourvue de deux trous de fixation (72) par lesquels passent les vis (53) qui permettent de fixer lesdites bêches (21) sur les flasques (49).

La machine selon l'invention fonctionne de la manière suivante.

Au travail, la machine (1) est attelée à un tracteur (2) qui la tire dans le sens et la direction de travail (3). Simultanément, la prise de force dudit tracteur (2) entraîne en rotation le rotor (16) dans le sens de rotation (57). En tournant, chaque bêche (21) arrache une motte de terre.

Comme l'axe longitudinal (18) du rotor (16) s'étend obliquement par rapport à la direction de travail (3), la bêche (21) imprime à la motte arrachée un mouvement qui est dirigé transversalement à la direction de travail (3).

Du fait que la bêche (21) a une partie active (64) courbée et vrillée, elle oblige également la motte de terre arrachée à se retourner de telle sorte que les chaumes se trouvent enfouies. Du reste, comme cette courbure et ce vrillage sont réalisés de manière sensiblement continue, le glissement des mottes arrachées le long de la surface de la partie active (64) des bêches (21) est très régulier.

Etant donné que la machine selon l'invention est entraînée en rotation positivement par une source motrice, elle est capable de travailler dans des terres très variées. En sus, la qualité du travail fourni est relativement constante.

Selon les travaux à réaliser, on pourra régler la vitesse de rotation du rotor (16), ainsi que la profondeur de travail des bêches (21). Le réglage de la vitesse de rotation du rotor (16) sera réalisé en modifiant le régime de sortie de la boîte de vitesses (22) tandis que la profondeur de travail sera réglée par le mécanisme de réglage (38) de la roue de soutènement (36).

En travail profond, où l'on cherche à avoir des mottes assez grosses, la vitesse de rotation du rotor (16) ne doit pas être trop importante. Ceci permet aux bêches (21) d'arracher des mottes d'une certaine grandeur et de bien les retourner sans les projeter, car ceci provoquerait leur cassure.

En travail moins profond tel que le déchaumage, où l'on cherche à obtenir un bon mélange de la terre avec les chaumes, la vitesse de rotation du rotor (16) pourra être plus importante. Ceci permet en effet aux bêches (21) d'arracher des mottes plus fines et de projeter celles-ci avec les chaumes, ce qui permet d'obtenir le bon mélange souhaité.

Dans certaines conditions, il est possible de hacher la paille qui se trouve sur le champ et de bien la mélanger à la terre. La machine selon l'invention permet ainsi dans certaines conditions de supprimer une opération de hachage préliminaire de la paille avant enfouissement.

Outre leur fonction de favoriser le retournement et/ou la projection des mottes arrachées, la courbure et le vrillage de la partie active (64) des bêches (21), de même que le détalonnage de l'arête extérieure (69) de ladite partie active (64), permettent aux bêches (21) de ne pas talonner sur le sol non travaillé. Ceci permet de réduire substantiellement les vibrations et la puissance absorbée de la machine.

Ces vibrations sont encore diminuées par le fait que les bêches (21) s'étendent selon une hélice le long du rotor (16). Lesdites bêches (21) pénètrent alors successivement dans le sol. La courbe de puissance absorbée par la machine est ainsi également plus régulière.

Différentes modifications ou améliorations peuvent être apportées à l'exemple de réalisation qui vient d'être décrit sans qu'on sorte pour autant du cadre de la présente invention tel que défini dans les revendications.

En particulier, il sera possible, dans le cadre de l'invention, de réaliser une machine qui est plus spécialement adaptée au travail profond, de même qu'une machine qui est plus spécialement adaptée au travail moins profond.

## Revendications

1. Machine agricole de travail du sol (1) comportant un rotor (16) muni de groupes (54, 541, 542,...) d'outils de travail du sol (21) régulièrement espacés le long dudit rotor (16), ce dernier étant entraîné positivement par une source motrice (2) autour de son axe longitudinal (18) qui s'étend obliquement par rapport à la direction de travail (3) de la machine, de telle sorte qu'au niveau du sol (58) les outils de travail du sol (21) tournent vers l'arrière, compte tenu du sens de déplacement de la machine au travail, et travaillent des bandes de terre (61, 62) qui sont sensiblement jointives, lesdits groupes (54, 541, 542,...) d'outils de travail du sol (21) présentant chacun une concavité dirigée vers l'extrémité (12) du rotor (16) la plus en avant, compte tenu du sens de déplacement (3) de la machine au travail, ladite machine étant par ailleurs munie de moyens de stabilisation latérale comportant au moins un organe de stabilisation latérale (44) agencé dans le voisinage de l'extrémité (11) du rotor (16) la plus en arrière, compte tenu du sens de déplacement (3) de la machine au travail, ainsi que de moyens de soutènement comportant au moins un organe de soutènement (36) réglable en hauteur et roulant sur le sol pendant le travail, caractérisée par le fait que chaque groupe (54, 541, 542,...) d'outils de travail du sol comporte des bêches (21) individuellement amovibles, la partie active de toutes les bêches étant inclinée en direction de l'extrémité (12) du rotor (16) la plus en avant, compte tenu du sens de déplacement de la machine au travail, que l'organe de stabilisation latérale (44) agencé dans le voisinage de l'extrémité (11) du rotor (16) la plus en arrière, compte tenu du sens de déplacement de la machine au travail, est constitué par un soc (46) s'étendant derrière ladite extrémité (11), et que le ou lesdits organes de soutènement (36) s'étendent essentiellement devant le rotor (16).

2. Machine agricole de travail du sol selon la revendication 1, caractérisée par le fait que la vitesse de rotation du rotor (16) peut être réglée au moyen d'une boîte de vitesses (22).

3. Machine agricole de travail du sol selon la revendication 2, caractérisée par le fait qu'en travail profond, le rotor (16) tourne à une vitesse comprise entre 50 et 110 tours par minute, et qu'en travail moins profond, sa vitesse est comprise entre 100 et 200 tours par minute.

4. Machine agricole de travail du sol selon l'une au moins des revendications 1 à 3, caractérisée par le fait que l'axe longitudinal (18) du rotor (16) fait avec une perpendiculaire (19) à la direction de travail (3) un angle (17) compris entre 20° et 35°.

5. Machine agricole de travail du sol selon la revendication 4, caractérisée par le fait que l'angle (17) est environ égal à 26°.

6. Machine agricole de travail du sol selon l'une au moins des revendications 1 à 5, caractérisée par le fait que le diamètre du rotor (16) est supérieur ou égal à 50 centimètres.

7. Machine agricole de travail du sol selon la revendication 6, caractérisée par le fait que le diamètre du rotor (16) est compris entre 60 et 90 centimètres.

8. Machine agricole de travail du sol selon l'une au moins des revendications 1 à 7, caractérisée par le fait que la partie active (64) de chaque bêche (21) est courbée de manière sensiblement continue.

9. Machine agricole de travail du sol selon la revendication 8, caractérisée par le fait que la partie active (64) de chaque bêche (21) est courbée suivant un rayon de courbure (66) sensiblement constant.

10. Machine agricole de travail du sol selon la revendication 8 ou 9, caractérisée par le fait que l'axe longitudinal (65) de la partie active (64) de chaque bêche (21) est courbé suivant un rayon de courbure (66) sensiblement constant.

11. Machine agricole de travail du sol selon la revendication 9 ou 10, caractérisée par le fait que la valeur du rayon de courbure (66) de la partie active (64) de chaque bêche (21) est sensiblement comprise entre O,3 et O,5 fois la valeur du diamètre du rotor (16).

12. Machine agricole de travail du sol selon l'une au moins des revendications 1 à 11, caractérisée par le fait que la partie active (64) de chaque bêche (21) est vrillée de telle sorte que l'arête frontale (67) de ladite partie active (64), vue dans le sens de rotation (57), soit plus éloignée de l'extrémité (12) du rotor (16) la plus en avant, que l'arête arrière (68) de ladite partie active (64).

13. Machine agricole de travail du sol selon la revendication 12, caractérisée par le fait que la partie active (64) de chaque bêche (21) est vrillée de manière sensiblement continue.

14. Machine agricole de travail du sol selon la revendication 12 ou 13, caractérisée par le fait que la partie active (64) de chaque bêche (21) est vrillée autour d'un axe parallèle à son axe longitudinal (65).

15. Machine agricole de travail du sol selon la revendication 14, caractérisée par le fait que la partie active (64) de chaque bêche (21) est vrillée autour de son axe longitudinal (65).

16. Machine agricole de travail du sol selon la revendication 14 ou 15, caractérisée par le fait que le vrillage de la partie active (64) de chaque bêche (21) a sensiblement au niveau de l'arête extérieure (69) une valeur comprise entre 5° et 15°.

17. Machine agricole de travail du sol selon la revendication 16, caractérisée par le fait que le vrillage de la partie active (64) de chaque bêche (21) a sensiblement au niveau de l'arête extérieure (69) une valeur sensiblement égale à 10°.

18. Machine agricole de travail du sol selon l'une au moins des revendications 1 à 17, caractérisée par le fait que le point d'intersection (70) de l'arête extérieure (69) et de l'arête frontale (67) est plus éloigné de l'axe longitudinal (18) du rotor (16) que le point d'intersection (71) de l'arête extérieure (69) et de l'arête arrière (68).

19. Machine agricole de travail du sol selon l'une au moins des revendications 1 à 18, caractérisée par le fait que l'arête frontale (67) de la partie active (64) est biseautée.

20. Machine agricole de travail du sol selon l'une au moins des revendications 1 à 19, caractérisée par le fait que chaque groupe (541, 542,...) de bêches (21) est décalé angulairement le long de l'axe longitudinal (18) du rotor (16), par rapport à ses groupes (54, 541;...) de bêches (21) adjacents, ce décalage angulaire entre tous les groupes (54, 541, 542,...) de bêches (21) étant sensiblement constant le long du rotor (16).

21. Machine agricole de travail du sol selon la revendication 20, caractérisée par le fait que le décalage angulaire entre deux groupes (54, 541, 542,...) de bêches (21) est tel que l'angle (59) formé entre deux bêches (21a ou 21b ou 21c ou 21d) correspondantes desdits groupes (54, 541, 542,...) adjacents, est différent de l'angle (60) formé entre une bêche (21a ou 21b ou 21c ou 21d) du premier groupe (54, 541,...) et la bêche précédente (21b ou 21c ou 21d ou 21a) du groupe (541, 542,...) vers lequel est dirigée la partie active (64) de ladite bêche (21a ou 21b ou 21c ou 21d) du premier groupe (54, 541,...).

22. Machine agricole de travail du sol selon l'une au moins des revendications 1 à 21, caractérisée par le fait qu'un organe de soutènement (36) s'étend devant l'extrémité (11) du rotor (16) la plus en arrière, compte tenu du sens de déplacement (3) de la machine au travail, derrière laquelle s'étend le soc de stabilisation (46).

23. Machine agricole de travail du sol selon l'une au moins des revendications 1 à 22, caractérisée par le fait qu'un organe de soutènement (36) s'étend devant chaque extrémité (11, 12) du rotor (16).

24. Machine agricole de travail du sol selon l'une au moins des revendications 1 à 23, caractérisée par le fait qu'un organe de soutènement (36) s'étend devant l'extrémité (11) du rotor (16), où est agencé un carter latéral (32) prévu pour transmettre le mouvement au rotor (16).

25. Machine agricole de travail du sol selon l'une au moins des revendications 1 à 24, caractérisée par le fait que la profondeur de travail du soc de stabilisation (46) est réglable indépendamment de la profondeur de travail du rotor (16).

**Patentansprüche**

1. Landwirtschaftliche Bodenbearbeitungsmaschine (1) mit einem Rotor (16), der mit Gruppen (54, 541, 542...) von Bodenbearbeitungswerkzeugen (21) versehen ist, die in gleichmässigen Abständen entlang des Rotors (16) angeordnet sind, welcher um seine schräg in bezug auf die Arbeitsrichtung (3) der Maschine verlaufende Längsachse (18) von einer Antriebsquelle (2) positiv derart angetrieben wird, dass sich die Bodenbearbeitungswerkzeuge (21) im Bereich des Bodens (58) nach hinten in bezug auf die Fahrtrichtung der Maschine im Betrieb drehen und im wesentlichen aneinandergrenzende Bodenstreifen (61, 62) bearbeiten, wobei die Gruppen (54, 541, 542...) der Bodenbearbeitungswerkzeuge (21) jeweils eine zu dem in Fahrtrichtung (3) der Maschine im Betrieb vordersten Ende (12) des Rotors (16) gerichtete konkave Krümmung aufweisen und die Maschine überdies mit Seitenstabilisationsmitteln, die zumindest ein in der Nähe des in Fahrtrichtung (3) der Maschine im Betrieb hintersten Endes (11) des Rotors (16) angeordnetes Seitenstabilisationselement (44) aufweisen, sowie mit Stützmitteln, die zumindest ein höhenverstellbares und während des Betriebs auf dem Boden rollendes Stützorgan (36) aufweisen, dadurch gekennzeichnet, dass jede Gruppe (54, 541, 542...) von Bodenbearbeitungswerkzeugen einzeln abnehmbare Spaten (21) umfasst, wobei der aktive Teil aller Spaten in Richtung des in Fahrtrichtung der Maschine im Betrieb vordersten Endes (12) des Rotors (16) geneigt ist, dass das in der Nähe des in Fahrtrichtung der Maschine im Betrieb hintersten Endes (11) des Rotors (16) angeordnete Seitenstabilisationselement (44) aus einer sich hinter dem Ende (11) erstreckenden Schar (46) besteht, und dass das (oder die) Stützorgan(e) (36) im wesentlichen vor dem Rotor (16) angeordnet ist (sind).

2. Landwirtschaftliche Bodenbearbeitungsmaschine nach Anspruch 1, dadurch gekennzeichnet, dass die Drehgeschwindigkeit des Rotors (16) durch ein Getriebe (22) geregelt werden kann.

3. Landwirtschaftliche Bodenbearbeitungsmaschine nach Anspruch 2, dadurch gekennzeichnet, dass der Rotor (16) bei tiefer Arbeit mit einer Geschwindigkeit von 50 bis 110 Umdrehungen pro Minute rotiert, während seine Geschwindigkeit bei weniger tiefer Arbeit zwischen 100 und 200 Umdrehungen pro Minute liegt.

4. Landwirtschaftliche Bodenbearbeitungsmaschine nach zumindest einem der Ansprüche 1 bis 3, dadurch gekennzeichnet, dass die Längsachse (18) des Rotors (16) mit einer Normalen (19) zur Arbeitsrichtung (3) einen Winkel (17) zwischen 20° und 35° einschliesst.

5. Landwirtschaftliche Bodenbearbeitungsmaschine nach Anspruch 4, dadurch gekennzeichnet, dass der Winkel (17) etwa gleich 26° ist.

6. Landwirtschaftliche Bodenbearbeitungsmaschine nach zumindest einem der Ansprüche 1 bis 5, dadurch gekennzeichnet, dass der Durchmesser des Rotors (16) grösser oder gleich 50 Zentimeter ist.

7. Landwirtschaftliche Bodenbearbeitungsmaschine nach Anspruch 6, dadurch gekennzeichnet, dass der Durchmesser des Rotors (16) zwischen 60 und 90 Zentimeter liegt.

8. Landwirtschaftliche Bodenbearbeitungsmaschine nach zumindest einem der Ansprüche 1 bis 7, dadurch gekennzeichnet, dass der aktive Teil (64) jedes Spatens (21) im wesentlichen kontinuierlich gekrümmt ist.

9. Landwirtschaftliche Bodenbearbeitungsmaschine nach Anspruch 8, dadurch gekennzeichnet, dass der aktive Teil (64) jedes Spatens (21) gemäss einem im wesentlichen konstanten Krümmungsradius (66) gekrümmt ist.

10. Landwirtschaftliche Bodenbearbeitungsmaschine nach Anspruch 8 oder 9, dadurch gekennzeichnet, dass die Längsachse (65) des aktiven Teils (64) jedes Spatens (21) gemäss einem im wesentlichen konstanten Krümmungsradius (66) gekrümmt ist.

11. Landwirtschaftliche Bodenbearbeitungsmaschine nach Anspruch 9 oder 10, dadurch gekennzeichnet, dass der Wert des Krümmungsradius (66) des aktiven Teils (64) jedes Spatens (21) im wesentlichen dem 0,3- bis 0,5-fachen Wert des Durchmessers des Rotors (16) entspricht.

12. Landwirtschaftliche Bodenbearbeitungsmaschine nach zumindest einem der Ansprüche 1 bis 11, dadurch gekennzeichnet, dass der aktive Teil (64) jedes Spatens (21) derart verwunden ist, dass die bei Betrachtung im Drehsinn (57) vordere Kante (67) des aktiven Teils (64) weiter vom vordersten Ende (12) des Rotors (16) entfernt ist als die hintere Kante (68) des aktiven Teils (64).

13. Landwirtschaftliche Bodenbearbeitungsmaschine nach Anspruch 12, dadurch gekennzeichnet, dass der aktive Teil (64) jedes Spatens (21) im wesentlichen kontinuierlich verwunden ist.

14. Landwirtschaftliche Bodenbearbeitungsmaschine nach Anspruch 12 oder 13, dadurch gekennzeichnet, dass der aktive Teil (64) jedes Spatens (21) um eine zu seiner Längsachse (65) parallele Achse verwunden ist.

15. Landwirtschaftliche Bodenbearbeitungsmaschine nach Anspruch 14, dadurch gekennzeichnet, dass der aktive Teil (64) jedes Spatens (21) um seine Längsachse (65) verwunden ist.

16. Landwirtschaftliche Bodenbearbeitungsmaschine nach Anspruch 14 oder 15, dadurch gekennzeichnet, dass die Verwindung des aktiven Teils (64) jedes Spatens (21) im wesentlichen im Bereich der Aussenkante (69) einen Wert zwischen 5° und 15° hat.

17. Landwirtschaftliche Bodenbearbeitungsmaschine nach Anspruch 16, dadurch gekennzeichnet, dass die Verwindung des aktiven Teils (64) jedes Spatens (21) im wesentlichen im Bereich der Aussenkante (69) einen Wert von im wesentlichen gleich 10° hat.

18. Landwirtschaftliche Bodenbearbeitungsmaschine nach zumindest einem der Ansprüche 1 bis 17, dadurch gekennzeichnet, dass der Schnittpunkt (70) der Aussenkante (69) und der vorderen Kante (67) weiter von der Längsachse (18) des Rotors (16) entfernt ist als der Schnittpunkt (71) der Aussenkante (69) und der hinteren Kante (68).

19. Landwirtschaftliche Bodenbearbeitungsmaschine nach zumindest einem der Ansprüche 1 bis 18, dadurch gekennzeichnet, dass die vordere Kante (67) des aktiven Teils (64) schneidenförmig ist.

20. Landwirtschaftliche Bodenbearbeitungsmaschine nach zumindest einem der Ansprüche 1 bis 19, dadurch gekennzeichnet, dass jede Gruppe (541, 542...) von Spaten (21) entlang der Längsachse (18) des Rotors (16) in bezug auf die benachbarten Gruppen (54, 541...) von Spaten (21) im Winkel versetzt ist, welche Winkelversetzung bei allen Gruppen (54, 541, 542...) von Spaten (21) entlang des Rotors (16) im wesentlichen konstant ist.

21. Landwirtschaftliche Bodenbearbeitungsmaschine nach Anspruch 20, dadurch gekennzeichnet, dass die Winkelversetzung bei zwei Gruppen (54, 541, 542...) von Spaten (21) derart ist, dass der zwischen zwei entsprechenden Spaten (21a oder 21b oder 21c oder 21d) der beiden benachbarten Gruppen (54, 541, 542...) gebildete Winkel (59) verschieden vom Winkel (60) ist, der zwischen einem Spaten (21a oder 21b oder 21c oder 21d) der ersten Gruppe (54, 541...) und dem vorhergehenden Spaten (21b oder 21c oder 21d oder 21a) der Gruppe (541, 542...), auf die der aktive Teil (64) des Spatens (21a oder 21b oder 21c oder 21d) der ersten Gruppe (54, 541...) gerichtet ist, gebildet ist.

22. Landwirtschaftliche Bodenbearbeitungsmaschine nach zumindest einem der Ansprüche 1 bis 21, dadurch gekennzeichnet, dass ein Stützorgan (36) vor dem in Fahrtrichtung (3) der Maschine im Betrieb hinterste Ende (11) des Rotors (16) angeordnet ist, hinter welchem sich die Stabilisationsschar (46) erstreckt.

23. Landwirtschaftliche Bodenbearbeitungsmaschine nach zumindest einem der Ansprüche 1 bis 22, dadurch gekennzeichnet, dass ein Stützorgan (36) vor jedem Ende (11, 12) des Rotors (16) angeordnet ist.

24. Landwirtschaftliche Bodenbearbeitungsmaschine nach zumindest einem der Ansprüche 1 bis 23, dadurch gekennzeichnet, dass ein Stützorgan (36) sich vor dem Ende (11) des Rotors (16) erstreckt, wo ein seitliches Gehäuse (32) für die Bewegungsübertragung auf den Rotor (16) vorgesehen ist.

25. Landwirtschaftliche Bodenbearbeitungsmaschine nach zumindest einem der Ansprüche 1 bis 24, dadurch gekennzeichnet, dass die Arbeitstiefe der Stabilisationsschar (46) unabhängig von der Arbeitstiefe des Rotors (16) regelbar ist.

**Claims**

1. An agricultural machine (1) for working the soil comprising a rotor (16) equipped with groups (54, 541, 542...) of soil working means (21) spaced regularly along said rotor (16), where the latter is driven positively by a power source (2) about its longitudinal axis (18) which extends obliquely in relation to the direction of work (3) of the machine, in such manner that at the level of the ground (58) the soil working means (21) rotate rearwards, taking into account the direction of movement of the machine during work and work strips of ground (61, 62) which are substantially adjacent, said groups (54, 541, 542...) of soil working means (21) each exhibiting a concavity directed towards the foremost end (12) of the rotor (16), taking into account the direction of movement (3) of the machine during work, said machine also being provided with lateral stabilization means comprising at least one lateral stabilization element (44) arranged in the vicinity of the rearmost end (11) of the rotor (16) taking into account the direction of movement (3) of the machine during work, as well as with supporting means comprising at least one supporting element (36) which is adjustable in height and rolls over the ground during work, characterised in that each group (54, 541, 542...) of soil working means comprises spades (21) which are individually removable, the active part of all the spades being inclined in the direction of the foremost end (12) of the rotor (16) taking into account the direction of movement of the machine during work, that the lateral stabilization element (44) arranged in the vicinity of the rearmost end (11) of the rotor (16) taking into account the direction of movement of the machine during work is formed by a chisel share (46) which extends behind the said end (11), and that the supporting element(s) (36) extend(s) substantially in front of the rotor (16).

2. An agricultural machine for working the soil as claimed in claim 1, characterised in that the rotation speed of the rotor (16) can be adjusted by means of a gearbox (22).

3. An agricultural machine for working the soil as claimed in claim 2, characterised in that for deep work the rotor (16) rotates at a speed of between 50 and 110 rotations per minute and that for less deep work its speed is between 100 and 200 rotations per minute.

4. An agricultural machine for working the soil as claimed in at least one of the claims 1 to 3, characterised in that the longitudinal axis (18) of the rotor (16) forms an angle (17) of between 20° and 35° with a line (19) perpendicular to the direction of work (3).

5. An agricultural machine for working the soil as claimed in claim 4, characterised in that the angle (17) is approximately equal to 26°.

6. An agricultural machine for working the soil as claimed in at least one of the claims 1 to 5, characterised in that the diameter of the rotor (16) is greater than or equal to 50 centimetres.

7. An agricultural machine for working the soil as claimed in claim 6, characterised in that the diameter of the rotor (16) is between 60 and 90 centimetres.

8. An agricultural machine for working the soil as claimed in at least one of the claims 1 to 7, characterised in that the active part (64) of each spade (21) is curved in a substantially continuous fashion.

9. An agricultural machine for working the soil as claimed in claim 8, characterised in that the active part (64) of each spade (21) is curved along a substantially constant radius of curvature (66).

10. An agricultural machine for working the soil as claimed in claim 8 or claim 9, characterised in that the longitudinal axis (65) of the active part (64) of each spade (21) is curved along a substantially constant radius of curvature (66).

11. An agricultural machine for working the soil as claimed in claim 9 or 10, characterised in that the value of the radius of curvature (66) of the active part (64) of each spade (21) ranges substantially between 0.3 and 0.5 times the value of the diameter of the rotor (16).

12. An agricultural machine for working the soil as claimed in at least one of the claims 1 to 11, characterised in that the active part (64) of each spade (21) is twisted in such manner that the front edge (67) of the said active part (64), considered in the direction of rotation (57), is farther away from the foremost end (12) of the rotor (16) than the rear edge (68) of said active part (64).

13. An agricultural machine for working the soil as claimed in claim 12, characterised in that the active part (64) of each spade (21) is twisted in a substantially continuous fashion.

14. An agricultural machine for working the soil as claimed in claim 12 or claim 13, characterised in that the active part (64) of each spade (21) is twisted about an axis parallel to its longitudinal axis (65).

15. An agricultural machine for working the soil as claimed in claim 14, characterised in that the active part (64) of each spade (21) is twisted about its longitudinal axis (65).

16. An agricultural machine for working the soil as claimed in claim 14 or claim 15, characterised in that the twist of the active part (64) of each spade (21) has a value of between 5° and 15° substantially at the level of the outer edge (69).

17. An agricultural machine for working the soil as claimed in claim 16, characterised in that the twist of the active part (64) of each spade (21) has a value substantially equal to 10° substantially at the level of the outer edge (69).

18. An agricultural machine for working the soil as claimed in at least one of the claims 1 to 17, characterised in that the point of intersection (70) of the outer edge (69) and the front edge (67) is farther away from the longitudinal axis (18) of the rotor (16) than the point of intersection (71) of the outer edge (69) and the rear edge (68).

19. An agricultural machine for working the soil as claimed in at least one of the claims 1 to 18, characterised in that the front edge (67) of the active part (64) is bevelled.

20. An agricultural machine for working the soil as claimed in at least one of claims 1 to 19, characterised in that each group (541, 542...) of spades (21) is angularly offset along the longitudinal axis (18) of the rotor (16) in relation to its adjacent groups (54, 541...) of spades (21), this angular offset between all the groups (54, 541, 542...) of spades (21) being substantially constant along the rotor (16).

21. An agricultural machine for working the soil as claimed in claim 20, characterised in that the angular offset between two groups (54, 541, 542...) of spades (21) is such that the angle (59) formed between two corresponding spades (21a or 21b or 21c or 21d) of the said adjacent groups (54, 541, 542...) differs from the angle (60) formed between a spade (21a or 21b or 21c or 21d) of the first group (54, 541...) and the preceding spade (21b or 21c or 21d or 21a) of the group (541, 542...) towards which the active part (64) of the said spade (21a or 21b or 21c or 21d) of the first group (54, 541...) is directed.

22. An agricultural machine for working the soil as claimed in at least one of the claims 1 to 21, characte rised in that a supporting element (36) extends in front of the rearmost end (11) of the rotor (16) taking into account the direction of movement (3) of the machine during work, behind which the stabilization chisel share (46) extends.

23. An agricultural machine for working the soil as claimed in at least one of the claims 1 to 22, characterised in that a supporting element (36) extends in front of each end (11, 12) of the rotor (16).

24. An agricultural machine for working the soil as claimed in at least one of the claims 1 to 23, characterised in that a supporting element (36) extends in front of the end (11) of the rotor (16) where a lateral housing (32), which serves to transmit the movement to the rotor (16), is arranged.

25. An agricultural machine for working the soil as claimed in at least one of the claims 1 to 24, characterised in that the depth of operation of the stabilization chisel share (46) is adjustable independently of the depth of operation of the rotor (16).

## FIG.1

EP 0 217 720 B1

FIG.2

11  30  10  9  12  14

31

33

34

IV  21

56  49  49  64  50

53  52

35  18  20  55  511

13  51  50  52  16  54  541  542

32

FIG.4

3

57  21c

18  49

21d

58  20  21b

542

541  54  60

21a  59

FIG.3

FIG.5

FIG.6

FIG.7